# EUROPEAN PATENT APPLICATION

(11) **EP 2 559 827 A1**
(43) Date of publication of application: **20.02.2013**
(21) Application number: 11177807.2
(22) Date of filing: 17.08.2011
(51) Int. Cl.: E04F 15/18, F24D 3/14

(54) **Panel for in-house pipe installation, arrangement and method of fabricating a panel**

(71) Applicant: Uponor Innovation AB, 73061 Virsbo (SE)
(72) Inventor: Dellwig, Stefan, 22419 Hamburg (DE); Schiavio, Luca, 20050 Ronco Briantino (IT); Teixeira, Joao, 4400-670 Vila Nova de Gaia (PT); Calatayud, Gema, 45200 Illescas (ES)
(74) Representative: Epping - Hermann - Fischer

(57) **Abstract**

A panel for in-house pipe installation comprises a panel layer having a material and a first surface for a pipe to be attached to. The panel layer comprises a first layer portion adapted to be attached with a second surface to a floor and a second layer portion adjacent to the first layer portion adapted to be attached with the second surface to a wall. The material is notched from the second surface panel layer as to form the first and second layer portion, respectively.

## Description

The present invention is related to a panel for in-house pipe installation and an arrangement for in-house pipe installation. The invention is also related to a method of fabricating a panel for in-house pipe installation.

During renovation of buildings, but also for normal construction, under-floor heating and cooling become increasingly important and commonly used. For this purpose, a thin panel on which plastic pipes are attached to are arranged and fixed on the floor. In a subsequent step, a layer of screed is deposited on top of it.

To reduce the acoustic transmission from the floor to the wall and vice-versa, those panels act not only a fixing panel for the pipes but also as acoustic protection. Further, the edge and corner sections of rooms in which such under-floor heating and cooling shall be installed has to be additionally protected by a separate edge insulation stripe to prevent an acoustical bypass from the screed layer to the wall.

With new and thinner panels on which plastic pipes can be attached to, the attached pipe may cause the whole panel to bend up close to the edges or the corners of the room during installation. As such, the use of edge insulation stripes is becoming more difficult.

Consequently, there is a need for an improved panel for in-house pipe installation and a method of fabricating the same.

These and other objects are solved by the subject matter of the present independent claims.

The invention proposes to provide a panel with an additional edge portion, which is attached to the panel itself. By using the panel with an edge insulation strip without separating the strip from the floor panel, the problem of bending the panel due to the pipe close to an edge or corner of a room can be significantly reduced or even prevented. Preferably, the edge insulation strip may be fixed to the wall with a double glue tape, clamps and the like.

In an embodiment of the invention, a panel for in-house pipe installation comprises a panel layer having material and a first surface for a pipe to be attached to. The panel layer comprises a first layer portion adapted to be attached with a second surface to a floor, and a second layer portion adjacent to the first layer portion. Said second layer portion is adapted to be attached with the second surface to a wall. In accordance with the present invention, the material is notched, cut or recessed from the surface of the panel layer as to form the first and the second layer portion, respectively.

The notch within the material of the panel layer provides the possibility of bending the panel layer alongside the notch without breaking the panel layer in half. This structure provides a high flexibility, as the panel layer itself can be used with both layer portions attached to the floor.

In this respect, the term "to notch" may also comprise the terms "to cut", "to groove", "to fissure", and "to recess".

Accordingly, the term "notch" in the material may comprise a recess, a cut, a fissure, a groove and the like.

To provide easy bending, the material of the panel layer may be notched between 40% and 85% of its thickness. Particularly, it may be notched between 50% and 75% of its thickness and, more particularly, approximately 75% of its thickness. The notching depth may be depending on the material used. For instance, a stiff material may be cut more deeply than a flexible material. In an embodiment, the panel layer may comprise a thickness in the range of 5 mm to 15 mm and particularly 5 mm to 10 mm. This thickness provides sufficient stability, good noise protection, sufficient heating insulation, and simple handling.

In a further aspect, the material of the panel layer may be continuously notched. A discontinuous notch may be used as well to increase stability, although such non-continuous notch or recess may more difficult to manufacture.

The material of the panel layer may be notched substantially parallel to an edge of the panel layer. If the panel layer comprises a short side and a long side, the material may be notched substantially parallel to the long side.

In an embodiment, the material may be notched approximately 5 to 15 cm and particularly approximately 10 cm from the panel layer's edge. Accordingly, the second portion may comprise a width in the range of 5 to 15 cm and particularly approximately 10 cm. Alternatively, the material may be notched approximately in the range of 3% to 10% of the total width of the panel layer from the edge of the panel layer. Further alternatively the second portion may comprise a width approximately in the range of 3% to 10% of the width of the first portion.

The panel layer may comprise different thicknesses. The notch depth may be depending on the thickness of the panel layer.

To fix the panel layer on the floor, the second layer portion may comprise an adhesive layer on the second surface. Said adhesive layer may be continuously distributed across the second surface or may comprise a specific structure like dots uniformly distributed across the second surface. The panel layer may comprise an adhesive pipe layer attached to the panel layer on a first surface of the material which is adapted for the pipe to be attached to. The adhesive panel layer may comprise a fleece, a non-woven, a mat of fibers or vylene, materials at which pipes with Velcro fastener and the like can be easily attached to.

The adhesive pipe layer may cover the first layer portion or the first layer portion and the second layer portion. Covering both layer portions may increase flexibility during installation of the panel and also reduce manufacturing costs.

The adhesive pipe layer may be attached to the material of the panel layer by an adhesive or an adhesive foil layer. Depending on the material of the panel layer, the adhesive foil layer may particularly comprise the same material. Attachment of the adhesive pipe layer can be achieved by heating the adhesive foil layer or providing a hot adhesive foil layer between the material and the adhesive pipe layer. The adhesive pipe layer may protrude across the first portion of the panel layer, at least on a side of the first portion facing away from the second portion. Such protrusion provides an easy assembly of more than one pipe layer and particularly installing several panels next to each other.

The material of the panel layer may comprise closed-porous foam, providing a good heating insulation and a sufficient acoustic protection. Further, such foam can easily be manufactured and notched. After the notching process, it still provides sufficient strength not to be ripped apart while at the same time having sufficient flexibility to be bended. The material may comprise polyethylene.

In a further embodiment, an arrangement for in-house pipe installation may comprise a panel as described above and at least one pipe attached to the panel. Such arrangement is the base for under-floor heating and cooling installation. A screed layer may deposit on the at least one pipe such that the screed layer covers the at least one pipe. The second portion of the panel protrudes the screed layer in accordance with the present invention.

Panels for in-house pipe installations according to the present invention can be fabricated by providing a panel layer with a first surface for a pipe to be attached to and a second surface adapted to be attached to a floor. The panel layer is cut from the second surface to provide a first portion to be attached to the floor and a bendable second portion adapted to be attached to a wall with the second surface. Still, the second portion is also adapted to be attached to the floor.

For that purpose, the panel layer may be cut continuously or non-continuously, depending on the material to be used. For a non-continuous cut, the means for cutting may be lifted for the panel layer in a periodic or non-periodic manner. The means for cutting may include a knife, a saw blade and the like.

It may be cut substantially parallel to a long side of the panel layer and into a depth of 40 to 85% of its thickness. Particularly, it may also be cut into a depth of 50% to 75% and, more particularly, to approximately 75% of its thickness.

The cut or the notch may be provided at a distance in the range of 5 to 15 cm and particularly approximately 10 cm from the edge. Alternatively, the panel layer may be cut such that the cut provides a smaller second portion having a width approximately in the range of 3% to 20% of the width of the first portion. Other ranges may also be used if appropriate.

In an embodiment, prior to cutting in the panel layer, an adhesive layer may be provided on the second surface. In another embodiment, a material layer with a first and a second surface may be provided and an adhesive pipe layer may be attached on the first surface covering at least an area corresponding to the defined first portion. Then, the material layer is cut on the surface opposite the first surface.

The present invention may now be explained in greater detail with various embodiments using the accompanying drawings in which:
- FIG. 1: illustrates a panel roll according to the present invention,
- FIG. 2: shows a bottom view of the panel layers according to the present invention,
- FIG. 3: shows a side view of the panel layer according to the present invention,
- FIG. 4: shows a side view of another embodiment according to the present invention,
- FIG. 5: illustrates an arrangement of a panel layer according to the present invention with pipes end screed layer deposited on it.

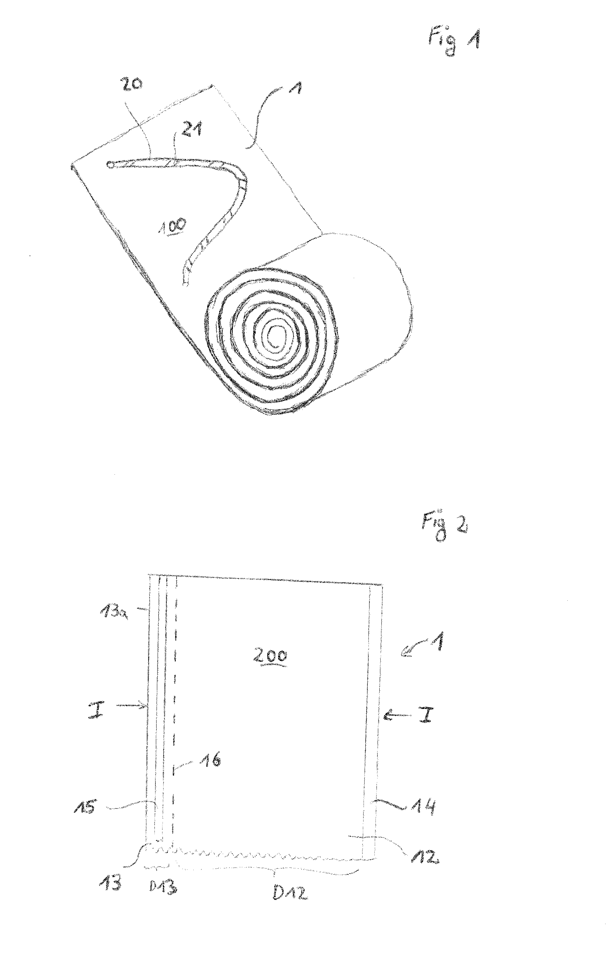

FIG. 1 illustrates a panel roll for in-house pipe installation. The panel roll may comprise a width approximately in the range of 1 m and a length of approximately 50 m rolled up. Depending on the room geometry in which the panel has to be installed, the user may cut the panel roll to provide respective pieces of the desired length. Panel 1 as illustrated comprises a panel layer having a fleece attached to it, forming first surface 100 of the panel. Said fleece allows an easy installation of pipe 20 by simply attaching pipe 20 to the fleece on the first surface 100 of panel 1. For this purpose, pipe 20 comprises a Velcro tape 21 arranged and fixed circular around pipe 20. Due to the use of Velcro tapes on pipe 20, the attachment process is reversible. As such, a user can vary, change, or amend the position of the pipe on panel 1 as desired during installation. Further, panel 1 will not be damaged if pipe 20 has to be changed during installation.

In accordance with the present invention, panel 1 according to FIG. 1 cannot only be used to be attached on the floor within a room, but also to provide an edge insulation strip to be attached to a wall adjacent to the floor. As such, panel 1 can be used equally for edge as well as for "in-room" installation.

FIG. 2 shows the bottom view of a panel according to the present invention. Panel 1 comprises a lower surface 200 to be attached on the room floor. It comprises a first portion 12 having width D12 and a second portion 13 adjacent to the first portion 12 having width D13. First portion 12 is separated from second portion 13 by notch 16, which in the present case is a continuous cut. The cut may comprise a rectangular-like shape, which is enlarged in this embodiment for illustration purposes.

Due to notch or cut 16, second portion 13 can be bended along the line as indicated to be fixated via an adhesive strip 15 to the wall. Adhesive strip 15 extends continuously and substantially parallel to the side edge of second portion 13. In this example, strip 15 is substantially arranged in the middle of second portion 13, but can also be arranged closer to edge side 13a, if necessary.

Width D12 of first portion 12 is approximately ten times larger than width D13 of the second portion. For instance, given a total width of 1 m of panel 1, width D13 may be in the range of 5 to 10 cm, whereas width D12 may be in the range of 90 to 95 cm.

As the second portion will normally be bended as to be arranged substantially perpendicular to the first portion, width D13 may also depend on the diameter of pipe 20 to be attached on the first surface and on the height of a screed layer deposit on top of it. Width D13 is chosen to be in a range such that width D13 of portion 13 is larger than any height of a screed layer deposit on the first surface of panel 1. As such, it is ensured that second portion 13 will protrude any screed layer deposited on panel 1 even in the bended condition and, therefore, provide a sufficient acoustic insulation between the screed layer and the wall.

Panel 1 also comprises a third portion 14, which is basically the fleece layer forming the first surface protruding from second portion 12. Fleece layer 14 is used to overlap adjacently arranged panels to prevent liquid screed flowing between two adjacent panels. Third portion 14 may be glued on an adjacent panel.

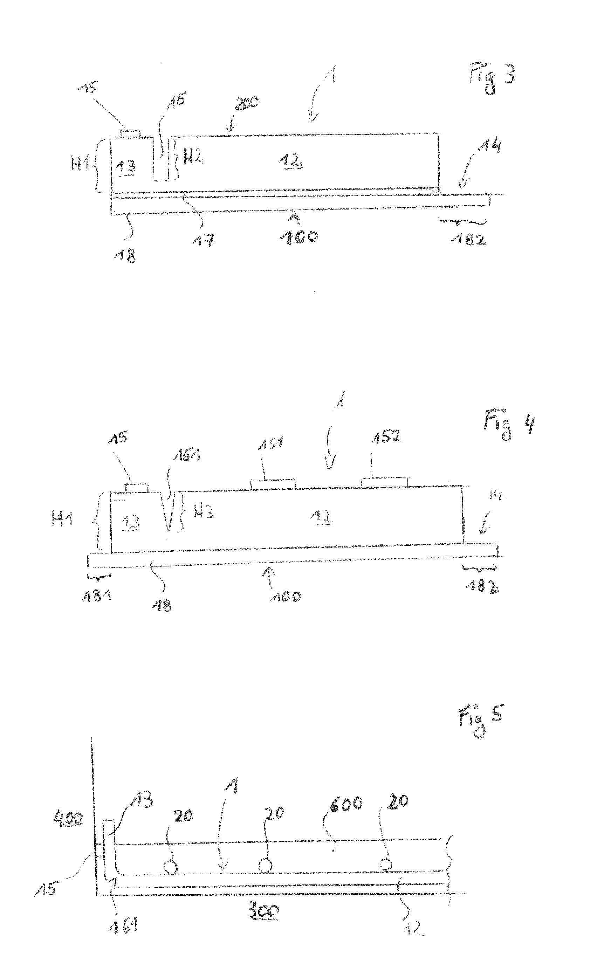

FIG. 3 illustrates a cut view along axis I-I' in the embodiment of FIG. 2. In accordance with the present invention, panel 1 comprises first surface 100 adapted to retrieve a pipe to be attached to and second surface 200 adapted to be attached to the floor. First surface 100 is the top surface of fleece layer 18 which is glued by adhesive layer 17 to the material of the panel layer.

The material may comprise close-porous foam of plastics, for instance polyethylene. Stiffness and porous size may depend on the needs, for instance a higher stability may be achieved with smaller porous size.

The panel layer of panel 1 comprises first portion 12 and second portion 13 separated by notch 16. In this example, notch 16 comprises a very small rectangular space. It might be a simple cut as well. Depth H2 of rectangular shaped notch 16 is approximately 75% of total height H1 of the panel layer. This depth provides a flexible bending point for second portion 13 to be bended, while at the same time having sufficient stability. Further, the remaining material between fleece layer 18 and the bottom of notch 16 prevents second portion 13 from being ripped apart from first portion 12 even under installation conditions.

To attach second portion 13 to a wall, second portion 13 comprises on its second surface adhesive elements 15.

Fleece layer 18 protrudes from the panel layer on the side facing away from second portion 13 by third portion 14. The resulting protruding strip 182 can be used to overlap an adjacent panel as to prevent screed material from flowing in a space between two adjacent panels. During the installation process, an adhesive material can be attached on the surface of strip 182 to glue third portion 14 to an adjacent panel.

FIG. 4 illustrates a second embodiment according to the present invention. In this embodiment, panel 1 comprises a triangular shape recess 161 separating first portion 12 from second portion 13. Depth H3 of cut 161 is approximately 60% of total height H1. Depth H3 may depend on the material used for the panel layer and also on the shape of the cut or the notch. Generally, depth H3 may be in the range from 50 to 90% of total height H1 of the panel layer. In this embodiment, a fleece layer 18 protrudes from the panel layer on both sides resulting in the protruding strips 181 and 182. Fleece layer 18 is directly attached to the panel layer during the manufacturing process. Again, the strips 181 and 182 on both sides can be used to overlap and glue adjacent panels to each other.

To attach panel 1 firmly on the floor during the installation process, several adhesive strip elements 15, 151 and 152 are arranged on second surface 200. The adhesive elements prevent the whole panel from bending up after a pipe is attached on first surface 100.

FIG. 5 finally shows an embodiment of the panel after installation in a building room. Panel 1 is attached with its first portion 12 on floor 300 and with its second portion 13 glued to sidewall 400. Second portion 13 is bended along notch 161 such that panel 1 is still a continuous panel. Adhesive 15 between second portion 13 and wall 400 prevents the whole panel from bending up after pipes 20 are attached on the fleece layer of panel 1. A screed layer 600 is deposited on top of panel 1 covering pipes 20 completely. Still, a small part of second portion 13 protrudes from screed layer 600. Hence, screed layer 600 is acoustically separated from floor 300 by first portion 12 and sidewall 400 by second portion 13.

For the manufacturing process, panel layer 1 can be cut right at the manufacturing size to provide an easy handling. For this purpose, the fleece layer 18 may be attached by an adhesive layer 17 to the panel layer. As previously discussed, fleece layer 18 may protrude from the panel layer on one or both sides. After the attaching process, the panel layer may be cut on the opposite surface 200 to provide the separated first and second portion. This cutting process can be done by a knife, saw and the like. The adhesive strip may be provided before or after the cutting process.

### Reference list

- 1: panel
- 12: first portion
- 13: second portion
- 14: third portion
- 15: adhesive strip
- 16: cut, notch, recess
- 18: fleece layer
- 20: pipes
- 21: Velcro layer
- 100: first surface
- 161: cut
- 181, 182: overlapping strips
- 200: second surface
- 300: floor
- 400: wall
- D12, D13: width
- H2, H3: depth
- H1: height

## Claims

1. Panel for in-house pipe installation comprising:
- a panel layer (1) having a material and first surface (100) for a pipe to be attached to, the panel layer comprising a
- a first layer portion (12) adapted to be attached with a second surface to a floor,
- a second layer portion (13) adjacent to the first layer portion (12), said second layer portion (13) adapted to be attached with a second surface (200) to a wall or a floor; wherein the material is notched from the second surface (200) of the panel layer as to form the first and second layer portion (12, 13), respectively.

2. The panel of claim 1, wherein the material is notched between 40 % and 85 % of its thickness (H1) and particularly notched between 50 % and 75 % of its thickness (H1) and more particularly approximately 75 % of its thickness (H1).

3. The panel of any of the preceding claims, wherein the second portion (13) comprises a width (D13) approximately in the range of 3 % to 10% of a width (D12) of the first portion (12) or in the range of 5 to 15 cm and particularly approximately 10 cm.

4. The panel of any of the preceding claims, wherein the material of the panel layer comprises a thickness (H1) in the range of 5 mm to 15 mm, particularly 5 mm to 10 mm.

5. The panel of any of the preceding claims, wherein the second surface (200) of the second layer portion (13) comprises an adhesive layer (15).

6. The panel of any of the preceding claims, further comprising an adhesive pipe layer (18) attached to the panel layer and adapted for the pipe (20) to be attached to, said adhesive pipe layer (18) comprising at least one of the following:
- fleece;
- non-woven;
- mat of fibres;
- vylene.

7. The panel of any of the preceding claims, wherein the adhesive pipe layer (18) protrudes across the first portion (12) of the panel layer (1) at least on a side of the first portion (12) facing away the second portion (13).

8. The panel of any of the preceding claims, wherein the material of the panel layer comprises at least one of the following:
- closed-porous foam;
- polyethylene;
- closed-porous polyethylene foam;
- closed-porous plastics.

9. Arrangement for in-house pipe installation comprising:
- a panel (1) according to any of the preceding claim;
- at least one pipe (20) attachable to the panel (1).

10. The arrangement of claim 9, further comprising at least one of the following:
- a screed layer deposit on the at least one pipe (20), such that the screed layer covers the at least one pipe (20),
- a screed layer deposit on the at least one pipe (20), such that the screed layer covers the at least one pipe (20), wherein the second portion (13) protrudes the screed layer.

11. Method of fabricating a panel for in-house pipe installation comprising:
- providing a panel layer with a first surface (100) for a pipe to be attached to and a second surface (200) adapted to be attached to a floor (300);
- cutting in the panel layer from the second surface (200) to provide a first portion (12) to be attached to the floor and a bendable second portion (13) adapted to be with the second surface attached to a wall.

12. The method of claim 11, wherein cutting in the panel layer comprises at least one of:
- cutting continuously;
- cutting in substantially parallel to a long side of the panel layer;
- cutting in into a depth of 40 % to 85 % of a thickness (H1) and particularly into 50 % and 75 % of the thickness and more particularly approximately 75 % of the thickness (H1) of the panel layer.

13. The method of any of claims 11 to 12, wherein the second portion (13) comprises a width (D13) approximately in the range of 3 % to 10% of a width (D12) of the first portion (12) or wherein the second portion (13) comprises a width (D13) in the range of 5 to 15 cm and particularly approximately 10 cm.

14. The method of any of the preceding claims further comprising:
- providing an adhesive (15) on the second surface (200) at least in one of the first and second portions (12, 13), preferably prior to cutting in the panel layer.

15. The method of any of the proceedings claims wherein providing a panel layer comprises:
- providing a material layer with the first and the second surface (100, 200);
- attaching an adhesive pipe layer (18) on the first surface (100) covering at least an area corresponding to the first portion (12), wherein the adhesive pipe layer comprises at least one of:
- fleece;
- non-woven;
- mat of fibres;
- vylene.
